# DEMANDE DE BREVET EUROPEEN

(11) **EP 2 551 004 A1**
(43) Date de publication de la demande: **30.01.2013**
(21) Numéro de dépôt: 11175830.6
(22) Date de dépôt: 28.07.2011
(51) Int. Cl.: B01D 29/23, B01D 29/58, B01D 35/28, E04H 4/12

(54) **Ensemble de filtration pour piscine et cartouche pour ensemble de filtration pour piscine**

(71) Demandeur: Arbatax, 10000 Troyes (FR)
(72) Inventeur: Paulet, Arnaud, 10180 Saint Lié (FR); Legrand, Jean-Michel, 10190 CHENNEGY (FR)
(74) Mandataire: Deschamps, Samuel

(57) **Abrégé**

La présente invention concerne un ensemble de filtration d'eau pour piscine, du type qui comprend :
- une enveloppe (10) ;
- une cartouche cylindrique placée dans l'enveloppe, formée d'un matériau plat plissé et ayant un support (20) placé du côté de sortie d'eau du cylindre de la cartouche (18) afin que ce support (20) empêche la déformation de la cartouche ;
- ledit support étant disposé à l'extérieur de la cartouche ; et
- un dispositif de circulation d'eau dans l'enveloppe (10) afin que l'eau traverse la cartouche, assurant la circulation de l'eau dans la cartouche (18) de l'intérieur vers l'extérieur de celle-ci,

caractérisé en ce que la cartouche (18) comporte une collerette (100) en matériau flexible à l'une de ses extrémités destinée à venir en appui sur un épaulement de ladite enveloppe (10), l'étanchéité de l'ensemble étant assurée par déformation élastique de la collerette (100) sur le rebord de l'enveloppe (10).

La présente invention se rapporte également à une cartouche pour ensemble de filtration pour piscine.

## Description

L'invention concerne un ensemble de filtration d'eau pour piscine, ainsi qu'une cartouche destinée à un tel ensemble de filtration.

On utilise depuis longtemps des filtres à cartouche plissée dans de nombreux domaines techniques. Dans les applications à basse pression et débit élevé, telles que la filtration de l'eau des piscines, l'eau circule toujours de l'extérieur de la cartouche vers l'intérieur. La circulation est assurée soit par une légère surpression créée à l'extérieur, soit par une aspiration créée à l'intérieur.

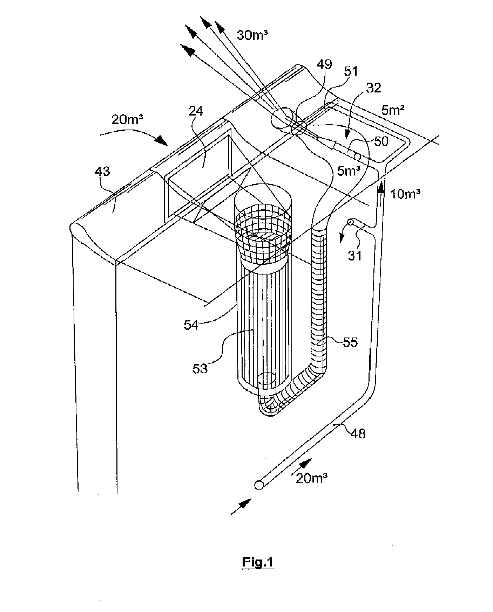

La figure 1 représente un exemple connu d'ensemble de filtration d'eau de piscine, représenté dans le document WO 03/062561. Dans cet ensemble, l'eau introduite par un skimmer 24, placé au niveau de l'eau dans la piscine, parvient à un panier disposé au-dessus d'urne cartouche cylindrique 53. L'eau qui a traversé le panier se trouve à l'intérieur d'une enveloppe 54 mais à l'extérieur de la cartouche 53. Une aspiration effectuée, dans le cas représenté, par un ensemble multiplicateur de débit 32, est transmise par un conduit 55 à l'intérieur de la cartouche.

Cette disposition présente un certain nombre d'inconvénients.

L'inconvénient principal est que les débris sont retenus à l'extérieur de la cartouche. En conséquence, lorsque celle-ci est retirée, pour être changée ou nettoyée, les débris peuvent tomber et repartir par la canalisation de circulation, en aval du filtre.

Ensuite, comme la pression extérieure est plus grande que la pression intérieure, les plis ont tendance à être chassés vers la circonférence interne de la cartouche et à se comprimer les uns contre les autres, notamment à l'extérieur où les plis se serrent les uns aux autres et réduisent la surface efficace. On constate en pratique, par simple observation de la densité des matières retenues après un certain temps d'utilisation, que seule la partie des plis proche de l'intérieur assure une filtration efficace.

Ensuite, lorsque les particules et débris s'accumulent au fond des plis, ils bouchent: les pores des deux côtés du pli et réduisent encore la surface utile. Le débit de filtration diminue rapidement.

Enfin, le nettoyage de ces filtres à cartouche est délicat.

L'invention a pour objet de remédier à ces inconvénients. Plus précisément, on a découvert selon l'invention que la simple circulation de l'eau dans la cartouche de l'intérieur vers l'extérieur permettait une augmentation spectaculaire du rendement de filtration. On s'est alors rendu compte qu'on pouvait obtenir des rendements encore plus élevés en adaptant la cartouche à ce sens de circulation, de l'intérieur vers l'extérieur, notamment par formation de plis courts et par utilisation d'un matériau relativement rigide.

Ainsi, non seulement on obtient un rendement de filtration très élevé, permettant soit une augmentation considérable du débit filtré par une installation de même dimension, soit une réduction de dimension de l'installation de filtration pour un même débit filtré, mais encore, grâce à cette disposition, l'intérieur de la cartouche peut loger le panier habituellement utilisé pour l'arrêt des débris de dimension relativement importante, tels que les feuilles mortes.

L'art antérieur connaît, par la demande de brevet français N° FR 2 877 856, un ensemble de filtration d'eau pour piscine, et un ensemble à cartouche et panier. Dans ce système de l'art antérieur, la forme de l'enveloppe est réalisée par un procédé de soufflage, ce qui permet d'obtenir de bonnes précisions pour ce qui est des dimensions externes de la pièce, mais ne permet pas d'obtenir une bonne précision pour ce qui est des dimensions internes de la pièce, ce qui pose un problème d'étanchéité. Le dispositif de blocage quart de tour mis en oeuvre par ce système de filtration de l'art antérieur, qui coopère avec une paroi interne de l'enveloppe au moyen d'oreilles, ne permet pas d'obtenir une étanchéité optimale.

A cet effet, la présente invention concerne, dans son acception la plus générale, un ensemble de filtration d'eau pour piscine, du type qui comprend :
- une enveloppe ;
- une cartouche cylindrique placée dans l'enveloppe, formée d'un matériau plat plissé et ayant un support placé du côté de sortie d'eau du cylindre de la cartouche afin que ce support empêche la déformation de la cartouche ;
- ledit support étant disposé à l'extérieur de la cartouche ; et
- un dispositif de circulation d'eau dans l'enveloppe afin que l'eau traverse la cartouche, assurant la circulation de l'eau dans la cartouche de l'intérieur vers l'extérieur de celle-ci,
caractérisé en ce que la cartouche comporte une collerette en matériau flexible à l'une de ses extrémités destinée à venir en appui sur un épaulement de ladite enveloppe, l'étanchéité de l'ensemble étant assurée par déformation élastique de la collerette sur le rebord de l'enveloppe.

Cet agencement permet de compenser les aspérités de la partie intérieure de l'enveloppe réalisée par soufflage.

De préférence, l'ensemble de filtration comporte une connexion à une pompe appartenant au dispositif de circulation d'eau située dans la partie supérieure de l'enveloppe.

Avantageusement, ladite connexion prend la forme d'un tronc de cône creux comportant une première extrémité située sur la paroi de ladite enveloppe, et une autre extrémité reliée à ladite pompe.

De préférence, ledit tronc de cône comporte des nervures dans sa périphérie interne, un insert en matériau rigide et collable, et une grille de filtrage positionnée à l'intérieur du creux du tronc de cône.

Selon un mode de réalisation, ledit ensemble de filtration comporte un panier de retenue, reposant par gravité sur un rebord d'une ouverture interne de ladite enveloppe.

De préférence, ledit panier de retenue est lesté.

Avantageusement, ledit panier de retenue comporte une poignée, cette poignée étant réalisée en un matériau lourd constituant le lest dudit panier.

Selon un mode de réalisation, ledit insert est en PVC.

Selon un mode de réalisation, ledit matériau flexible est du polypropylène.

De préférence, la dimension radiale des plis de la cartouche est inférieure à 20 % du diamètre extérieur de la cartouche.

Avantageusement, le matériau de filtration de la cartouche est un non-tissé qui a une porosité comprise entre 70 et 90 %.

Selon un mode de réalisation, ledit panier de retenue ferme entièrement une extrémité de la cartouche afin que l'eau à filtrer passe obligatoirement dans le panier avant de traverser la cartouche, et l'ouverture du panier comporte au moins un clapet qui, en l'absence de circulation et dans l'eau, a une position normalement fermée.

De préférence, le panier comporte un dispositif d'accrochage sur la cartouche afin que le panier et la cartouche puissent être retirés ensemble.

La présente invention se rapporte également à une cartouche pour l'ensemble de filtration pour piscine précédemment évoqué, caractérisée en ce qu'elle comporte une collerette en matériau flexible à l'une de ses extrémités destinée à venir en appui sur un épaulement de ladite enveloppe, l'étanchéité de l'ensemble étant assurée par déformation élastique de la collerette sur le rebord de l'enveloppe.

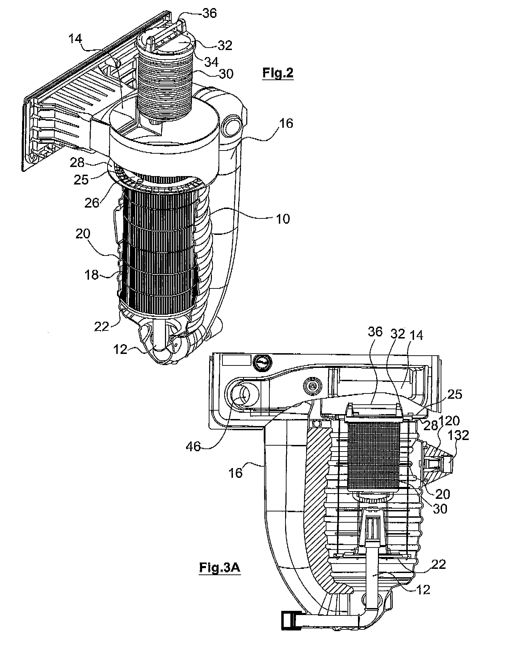

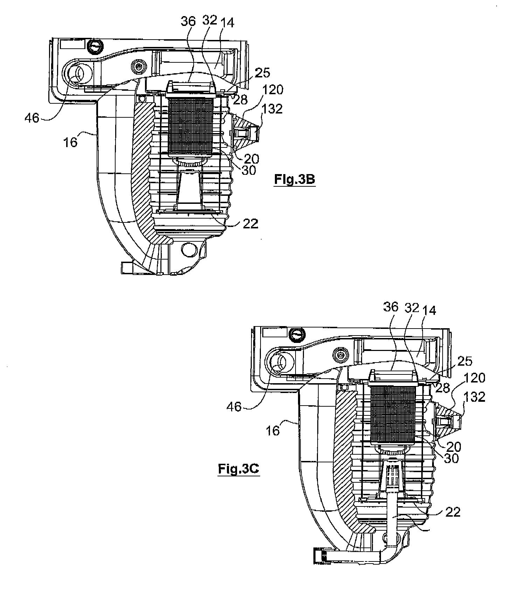

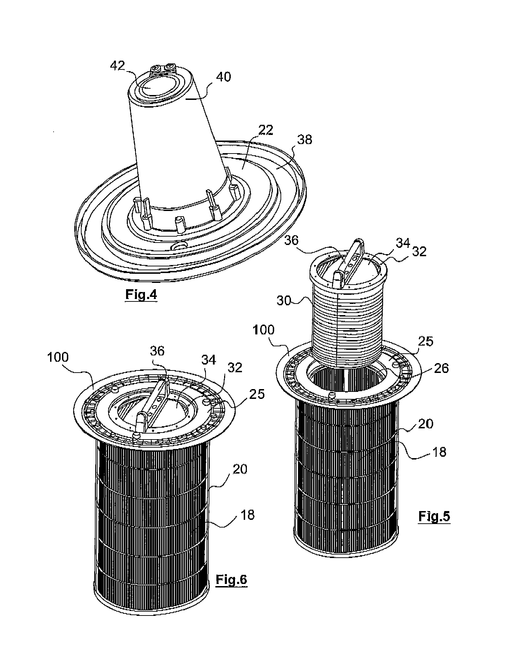

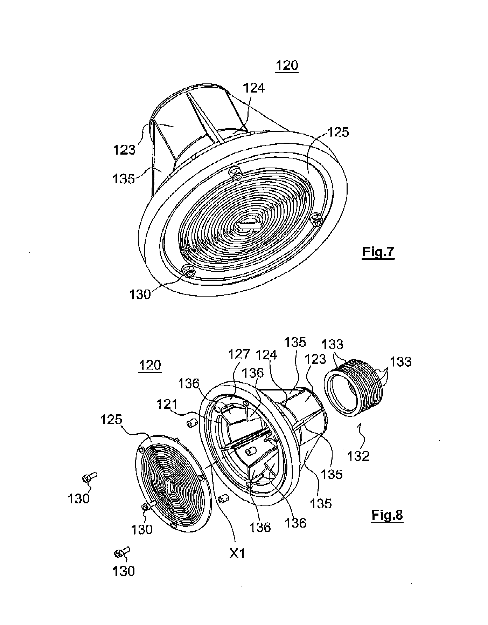

D'autres caractéristiques et avantages ressortiront mieux de la description qui va suivre, faite en référence aux dessins annexés sur lesquels: la figure 1, reprise d'un document existant et déjà décrite, est une vue schématique en perspective d'un ensemble de filtration connu; la figure 2 est une vue en perspective avec des parties arrachées d'un ensemble de filtration selon l'invention; les figures 3A, 3B et 3C sont des coupes avec des parties arrachées de l'ensemble de filtration de la figure 2, sans sa cartouche; la figure 4 est une vue en perspective d'un élément 22 d'extrémité de la cartouche utilisée dans les ensembles des figures 2, 3A, 3B et 3C; la figure 5 est une vue éclatée d'une cartouche avec un panier de retenue; la figure 6 représente la cartouche et le panier de retenue de la figure 5 en position de coopération ; et les figures 7 et 8 illustrent la connexion à une pompe.

Les figures 2, 3A, 3B et 3C représentent les principaux éléments d'un ensemble perfectionné de filtration, comprenant les éléments fondamentaux d'un ensemble de filtration selon l'invention, ainsi que des éléments complémentaires.

Dans un mode de réalisation, l'ensemble comporte une enveloppe 10 représentée sous forme d'un corps à nervures de renforcement formé par soufflage, destiné à permettre la circulation de l'eau d'une piscine entre une entrée comprenant un skimmer 14, placé au niveau de la surface de l'eau de la piscine, et une sortie par laquelle passe un tube 12 d'aspiration. La sortie de l'enveloppe 10 est reliée à un tube évasé 16 d'un multiplicateur de débit, qui ne fait pas partie de l'invention. La pompe d'aspiration (non représentée) et le multiplicateur de débit constituent un dispositif de circulation pour l'ensemble de filtration.

Dans un autre mode de réalisation, l'ensemble de filtration comporte une connexion 120 à une pompe appartenant au dispositif de circulation d'eau située dans la partie supérieure de l'enveloppe 10. Selon une variante, ladite connexion 120 prend la forme d'un tronc de cône creux comportant une première extrémité située à sur la paroi de ladite enveloppe 10, et une autre extrémité reliée à ladite pompe.

L'enveloppe 10 contient une cartouche 18 formée d'une feuille d'un matériau plissé et de forme cylindrique, disposée dans un support perforé 20, représenté sous forme d'une grille comprenant des cercles fixés à des barres longitudinales, de préférence d'acier inoxydable ou galvanisé ou de matière plastique. Ce support est destiné à être au contact de l'extérieur des plis de la cartouche lorsque celle-ci est en fonctionnement, en empêchant son expansion radiale.

La cartouche 18 et le support 20 sont tenus par un élément d'extrémité inférieure de la cartouche, mieux représenté sur la figure 4. L'autre extrémité de la cartouche comporte un flasque 25 qui délimite une ouverture centrale 26. La partie extérieure du flasque 25 forme un rebord 28 destiné à venir coopérer de façon étanche avec un épaulement de l'enveloppe, comme l'indiquent clairement les figures 3A, 3B et 3C.

Un panier de retenue 30, qui n'est destiné qu'à retenir les débris de grande dimension, tels que les feuilles mortes, possède un fond inférieur fermé et, à sa partie supérieure, un flasque 32 destiné à venir coopérer de façon étanche avec l'ouverture de l'orifice 26 du flasque 25 d'extrémité de la cartouche. Ainsi, la cartouche peut être bloquée sur l'enveloppe.

L'ouverture du panier de retenue 30 comporte deux clapets 34 qui, lorsqu'ils sont dans l'eau, ont tendance à venir fermer l'ouverture délimitée par le flasque 32. Par contre, lorsqu'il existe une circulation d'eau de haut en bas, les clapets 34 s'ouvrent. On a aussi représenté une poignée 36. Selon un mode de réalisation, les clapets 34 sont réalisés dans un matériau à mémoire de forme, de préférence en polyuréthane.

Selon un mode de réalisation, le flasque 32 du panier de retenue peut être bloqué sur le flasque 25 de la cartouche. De cette manière, lorsque le panier de retenue est bloqué sur la cartouche, il est solidaire de celle-ci et l'ensemble du panier et de la cartouche peut être manipulé comme un tout, grâce à la poignée 36.

Selon un autre mode de réalisation, le panier de retenue est alourdi par la poignée 26 en matériau inoxydable.

On note sur la figure 4 que le fond fermé 22 de la cartouche d'une part délimite un logement 38 pour l'extrémité de la cartouche plissée, et d'autre part un embout 40 qui se termine par un clapet 42. Ce clapet a une position normale fermée. Cependant, lorsque la pression au-dessous de l'extrémité 22 (sur la figure 4) est supérieure à la pression au-dessus, le clapet peut s'ouvrir, par exemple pour évacuer l'air qui aurait été piégé dans l'embout 40, ou pour le passage d'eau lors de la mise en place d'une cartouche.

Les figures 2, 3A, 3B et 3C permettent de comprendre comment fonctionne l'ensemble de filtration qu'on vient de décrire. Dans le cas particulier considéré, la circulation de l'eau de la piscine entre le skimmer 14 et la sortie 46 est assurée par un dispositif de circulation qui comprend, dans le cas particulier considéré, un multiplicateur de débit qui comporte une pompe qui aspire l'eau par l'intermédiaire du tube 12 ou du tronc de cône 120, et transmet celle-ci à un multiplicateur de débit qui provoque une forte aspiration par le tube ascendant 16.

De cette manière, le débit total à la partie inférieure de l'enveloppe est élevé et se compte en dizaines de mètres cubes par heure, avec une perte de charge au plus de quelques dizaines de millibars, lorsque la cartouche est neuve. L'eau provenant du skimmer 14 ouvre les clapets 34 et pénètre dans le panier 30. Elle sort du panier 30 par sa paroi latérale et se trouve alors à l'intérieur de la cartouche 18 (celle-ci n'est pas représentée sur les figure 3A, 3B et 3C afin que la structure du support perforé 20 et des éléments d'extrémité 22 et 25 apparaisse clairement). L'eau aspirée dans l'enveloppe 10 traverse donc la cartouche de l'intérieur vers l'extérieur, puis elle parvient au multiplicateur de débit 16 et au tube 12 ou tronc de cône 120.

En conséquence, il existe une surpression à l'intérieur de la cartouche par rapport à l'extérieur: la cartouche est poussée vers le support extérieur 20 et les plis ont donc tendance à s'écarter. On constate que la simple inversion de sens de circulation d'une cartouche existante assure déjà pratiquement un doublement du rendement de filtration.

Dans les ensembles de filtration pour piscine qui sont destinés à filtrer de quelques mètres cubes à quelques dizaines de mètres cubes par heure, les cartouches classiques utilisées ont un diamètre extérieur de 20 à 40 cm et une longueur de pli, en direction radiale, en général comprise entre 5 et 10 cm.

Dans ces cartouches classiques, lorsque la perte de charge créée par bouchage de la cartouche a suffisamment augmenté pour qu'on considère que celle-ci doit être nettoyée ou remplacée, on constate, par observation des plis de la cartouche, que celle-ci n'est véritablement bouchée que sur une courte partie proche de l'arête intérieure.

Il est avantageux, selon l'invention, non seulement d'inverser le sens de circulation de l'eau, mais en outre de raccourcir considérablement la longueur des plis. On a ainsi réalisé des cartouches avec des plis ayant une longueur radiale de 2 à 5 cm. On a alors constaté de manière surprenante que, dans le cas d'une cartouche ayant un diamètre extérieur de 38 cm et des plis ayant une longueur radiale de 3,5 cm, lorsque la cartouche doit être nettoyée ou remplacée, la totalité pratiquement de la longueur des plis était bouchée par des débris d'une manière apparemment égale.

On a en particulier constaté qu'il était avantageux, à cet effet, que le matériau de filtration soit relativement rigide. On s'est rendu compte en particulier qu'un non-tissé gaufré, notamment par formation de nombreuses zones ponctuelles de compression de dimension de l'ordre d'une fraction de millimètre disposées à des distances de quelques millimètres les unes des autres, donnait un matériau rigide permettant l'obtention de cartouches ayant un excellent rendement de filtration.

Dans un exemple avantageux de cartouche selon l'invention, on utilise un non-tissé de polyester type 021/150 de Johns Manville, ayant une porosité de 80 % environ, gaufré avec des lignes parallèles de points de compression de l'ordre de 0,5 mm, placées à des intervalles de 2,5 mm. Cette feuille est suffisamment rigide pour que, lorsqu'une cartouche est constituée avec ce matériau avec des plis dont la dimension radiale est inférieure à 5 cm, la totalité pratiquement du milieu de filtration constitué par la feuille de non-tissé soit uniformément utilisée dans la cartouche. On constate que l'utilisation de ce matériau donne un doublement pratiquement du rendement de filtration par rapport au matériau normalement utilisé dans les cartouches du commerce.

On peut utiliser d'autres matériaux, mais il est avantageux, de façon générale, que la porosité soit comprise entre 70 et 90 %.

En résumé, on peut considérer que l'invention a les caractéristiques et avantages suivants.

D'abord, la circulation de l'eau de l'intérieur vers l'extérieur a un effet bénéfique dans la mesure où la pression, au lieu d'avoir tendance à comprimer la cartouche sur elle-même vers l'intérieur, a. tendance à l'écarter vers l'extérieur et donc à mettre mieux à disposition la grande surface de filtration disponible.

La longueur relativement réduite des plis et l'utilisation d'un matériau relativement rigide pour la formation des plis permet d'éviter pratiquement le contact des plis, pour les valeurs des pertes de charge présentées par les ensembles de filtration d'eau des piscines, si bien que la totalité pratiquement de la surface de filtration est utilisée efficacement.

Lorsqu'on utilise en combinaison les trois caractéristiques précitées, c'est-à-dire la circulation de l'intérieur vers l'extérieur, les plis relativement courts et un matériau relativement rigide, on se rend compte que, pour une même surface de filtration du matériau, le débit obtenu peut être multiplié d'un facteur supérieur à 3. Ce résultat est obtenu sans augmentation importante de dimension de la cartouche en direction radiale.

Cependant, un avantage supplémentaire de l'invention est qu'il est avantageux d'utiliser une cartouche de diamètre accru et de moindre hauteur, et de loger le panier de retenue à l'intérieur de la cartouche. L'augmentation de diamètre permet l'utilisation d'un plus grand nombre de plis et donc d'une plus grande surface de filtration, et la réduction de hauteur permet une réduction de la dimension de l'ensemble de filtration, et donc de son prix.

Cette réduction de hauteur est due non seulement au fait que les cartouches ont un grand diamètre et une faible hauteur, mais aussi au fait que l'espace auparavant occupé par le panier est supprimé puisque le panier est maintenant logé à l'intérieur de la cartouche.

En outre, le fait que la cartouche a un diamètre accru et surtout des plis de plus faible dimension facilite beaucoup le nettoyage de la cartouche.

Les clapets de retenue de la partie supérieure du panier empêchent que les débris flottants, entraînés par le courant de circulation, ne puissent ressortir lorsque la circulation est interrompue pour l'extraction de la cartouche et du panier.

D'autre part, le clapet de l'extrémité inférieure fermée permet l'évacuation automatique de l'air qui pourrait être piégé et pourrait donc gêner l'amorçage d'une pompe aspirant par le tube 12, et le passage automatique de l'eau qui remonte lorsqu'une nouvelle cartouche est introduite.

L'ensemble de filtration comporte également une connexion 120 à laquelle est reliée la pompe d'aspiration. Cette connexion 120 est située dans la partie supérieure de l'enveloppe 10, c'est-à-dire la partie qui se situe entre le plan médian transversal de la cartouche 18 et l'extrémité haute de la cartouche 18 lorsque cette dernière est installée en position d'utilisation dans la cartouche 18.

Un tel positionnement de la connexion 120 permet de limiter le nombre de jonctions du tube assurant la liaison entre la connexion et la pompe d'aspiration. En effet, dans le cas où la connexion 120 est réalisée dans la partie basse de la cartouche, il est nécessaire de faire appel à un tube ayant neuf jonctions réalisées par collage ; alors que dans l'invention, il est nécessaire de faire appel à un tube ayant deux jonctions uniquement, ce qui limite le risque de fuite.

La connexion 120 est formée par une pièce creuse 124 en forme de tronc de cône présentant une extrémité de grande section 121 destinée à être fixée à la paroi de l'enveloppe 10 en face d'une ouverture traversante ménagée dans la partie supérieure de l'enveloppe 10 et une extrémité de petite section 123 destinée à être reliée à la pompe d'aspiration. La pièce 124 est réalisée de préférence en polyéthylène.

Une grille 125 permettant d'éviter l'introduction de débris à l'intérieur de la pompe d'aspiration est plaquée contre un épaulement 127 interne situé du côté de l'extrémité 121 de grande section. A cet effet, la grille 125 a la forme d'un disque présentant des ouvertures annulaires concentriques de petites dimensions. Des moyens de fixation 130 assurent la fixation de la grille 125 à la pièce creuse 124.

Par ailleurs, un insert 132 est installé du côté de l'extrémité de petite section 123 de la pièce 124. Cet insert 132 est par exemple emmanché à force à l'intérieur de la pièce 124, de manière à être entouré par la pièce creuse 124. Par « entourer », on entend le fait que l'insert 132 est positionné sensiblement entièrement à l'intérieur du creux délimité par la pièce 124. L'insert 132 présente une forme sensiblement cylindrique et comporte sur sa surface externe des gorges annulaires 133 régulièrement espacée axialement. L'utilisation de cet insert 132 réalisé de préférence en PVC permet de faciliter la liaison avec la pompe. En effet, une telle liaison aurait été très difficile à réaliser avec une pièce faite entière en polyéthylène.

La pièce creuse 124 comporte également des nervures 135, 136 pour la rigidifier. Les nervures 135 sont réparties circonférentiellement de manière régulière autour de la périphérie externe de la pièce creuse 124. Les nervures 136 sont réparties circonférentiellement de manière régulière autour de la périphérie interne de la pièce creuse 124. Ces nervures 135, 136 s'étendent radialement et axialement par rapport à un axe X1 de symétrie de la pièce 124.

La cartouche 18 comporte une collerette 100 qui prend la forme d'un anneau de faible épaisseur. Le diamètre de cette collerette 100 est supérieur au diamètre de l'ouverture de la cartouche 18 afin de boucher la zone ouverte entre la paroi externe de la cartouche 18 et la paroi interne de l'enveloppe 10.

Cette collerette 100 est en matériau flexible à l'une de ses extrémités destinée à venir en appui sur un épaulement de ladite enveloppe 10, l'étanchéité de l'ensemble étant assurée par déformation élastique de la collerette 100 sur le rebord de l'enveloppe 10.

Bien entendu, diverses modifications peuvent être apportées par l'homme de l'art aux ensembles qui viennent d'être décrits uniquement à titre d'exemple non limitatif sans sortir du cadre de l'invention.

## Revendications

1. Ensemble de filtration d'eau pour piscine, du type qui comprend :
- une enveloppe (10) ;
- une cartouche cylindrique placée dans l'enveloppe, formée d'un matériau plat plissé et ayant un support (20) placé du côté de sortie d'eau du cylindre de la cartouche (18) afin que ce support (20) empêche la déformation de la cartouche ;
- ledit support étant disposé à l'extérieur de la cartouche ; et
- un dispositif de circulation d'eau dans l'enveloppe (10) afin que l'eau traverse la cartouche, assurant la circulation de l'eau dans la cartouche (18) de l'intérieur vers l'extérieur de celle-ci,
**caractérisé en ce que** la cartouche (18) comporte une collerette (100) en matériau flexible à l'une de ses extrémités destinée à venir en appui sur un épaulement de ladite enveloppe (10), l'étanchéité de l'ensemble étant assurée par déformation élastique de la collerette (100) sur le rebord de l'enveloppe (10).

2. Ensemble de filtration selon la revendication 1, **caractérisé en ce qu'**il comporte une connexion (120) à une pompe appartenant au dispositif de circulation d'eau située dans la partie supérieure de l'enveloppe (10).

3. Ensemble de filtration selon la revendication 2, **caractérisé en ce que** ladite connexion (120) prend la forme d'un tronc de cône creux comportant une première extrémité située sur la paroi de ladite enveloppe (10), et une autre extrémité reliée à ladite pompe.

4. Ensemble de filtration selon la revendication 3, **caractérisé en ce que** ledit tronc de cône (120) comporte des nervures (135, 136) dans sa périphérie interne, un insert (132) en matériau rigide et collable, et une grille de filtrage (125) positionnée à l'intérieur du creux du tronc de cône (120).

5. Ensemble de filtration selon l'une des revendications 1 à 4, **caractérisé en ce qu'**il comporte un panier (30) de retenue, reposant par gravité sur un rebord d'une ouverture interne de ladite enveloppe (10).

6. Ensemble de filtration selon la revendication 5, **caractérisé en ce que** ledit panier (30) de retenue est lesté.

7. Ensemble de filtration selon la revendication 6, **caractérisé en ce que** ledit panier (30) de retenue comporte une poignée, cette poignée étant réalisée en un matériau lourd constituant le lest dudit panier (30).

8. Ensemble de filtration selon la revendication 4, **caractérisé en ce que** ledit insert (132) est en PVC.

9. Ensemble de filtration selon la revendication 1, **caractérisé en ce que** ledit matériau flexible est du polypropylène.

10. Ensemble de filtration selon l'une des revendications précédentes, **caractérisé en ce que** la dimension radiale des plis de la cartouche (18) est inférieure à 20 % du diamètre extérieur de la cartouche (18).

11. Ensemble de filtration selon l'une des revendications précédentes, **caractérisé en ce que** le matériau de filtration de la cartouche (18) est un non-tissé qui a une porosité comprise entre 70 et 90 %.

12. Ensemble de filtration selon la revendication 5, **caractérisé en ce que** le panier (30) de retenue ferme entièrement une extrémité de la cartouche (18) afin que l'eau à filtrer passe obligatoirement dans le panier (30) avant de traverser la cartouche (18), et l'ouverture du panier (30) comporte au moins un clapet (34) qui, en l'absence de circulation et dans l'eau, a une position normalement fermée.

13. Ensemble de filtration selon la revendication 12, **caractérisé en ce que** le panier (30) comporte un dispositif d'accrochage sur la cartouche (18) afin que le panier et la cartouche puissent être retirés ensemble.

14. Cartouche (18) pour ensemble de filtration pour piscine selon l'une des revendications 1 à 13,
**caractérisée en ce qu'**elle comporte une collerette (100) en matériau flexible à l'une de ses extrémités destinée à venir en appui sur un épaulement de ladite enveloppe (10), l'étanchéité de l'ensemble étant assurée par déformation élastique de la collerette (100) sur le rebord de l'enveloppe (10).
